# EUROPEAN PATENT APPLICATION

(11) **EP 2 261 425 A1**
(43) Date of publication of application: **15.12.2010**
(21) Application number: 10165763.3
(22) Date of filing: 11.06.2010
(51) Int. Cl.: E02D 27/52, E02B 17/02, F03D 1/00

(54) **Hybrid offshore large pile - gravity foundation for constructions, and installation method therefor**

(30) Priority: 12.06.2009 NL 2003012
(71) Applicant: D.E.M.E. NV, 2070 Zwijndrecht (BE)
(72) Inventor: Van Den Bergh, Peter, B-2540, Hove (BE); De Poorter, Bart, B-9090, Melle (BE)
(74) Representative: Brouwer, Hendrik Rogier

(57) **Abstract**

The present invention relates to an offshore foundation (1) for mounting a construction such as a bridge, mast or components of an electricity generating wind farm such as a wind turbine generator, transformer or pole, comprising: a lower large pile section (2), at least partially hollow (10), with an open base end (16), adapted for excavation of sea bed material from inside the foundation (1), a mid section (4), at least partially hollow (12), that gradually narrows from the large pile section (2) towards an upper section (6), and an upper section (6), at least partially hollow (14), which extends from the mid section (4), ending in an open flange (8) suitable for attachment to said construction.

## Description

### BACKGROUND TO THE INVENTION

The present invention relates to an offshore foundation for constructions such as bridges, and upright (vertical) constructions, in particular wind turbines. The present trend for continued growth in renewable energies, particularly wind turbines necessitates turbines of increased size and weight to be installed further offshore in larger water depths. With conventional offshore wind turbine foundations, steel piles are driven into the seabed. To accommodate the larger wind turbines in larger water depths, piles with a length of 50 meters or more may be required which can make such constructions uneconomical given the costs of steel as a raw material. In some cases, theoretical pile diameter exceeds 7 m which makes this solution unfeasible.

Offshore gravity foundations do not require piles, but rely on the weight and area of a base structure in the sea bed to provide stability. They can be made from concrete, that reduces costs compared with monopile foundations. However, generally, gravity foundations are not considered as suitable for larger turbines in larger water depths.

Both the monopile and gravity types of foundation are sensitive to the type of soil below the seabed. For example, a monopile foundation is difficult to install when rock, boulder clay, and gravel are present which impede the hammering process. A gravity foundation will tend to become unstable when supported by a boulder clay or clay. In addition, both foundation types are limited as to the depth at which they can be installed. Monopile foundations operate at a maximum between 20 to 30 m, gravity foundations, between 30 to 40 m. These operational limits exclude certain deeper sites that prevent harnessing of the more powerful sea breezes.

The present invention provides new type of foundation called hybrid foundation suitable for supporting larger offshore turbines, but which is more cost-effective than conventional systems and overcomes other problems of the art.

### SUMMARY OF SOME EMBODIMENTS OF THE INVENTION

One embodiment of the invention is an offshore foundation (1) for mounting a construction such as a bridge, mast or components of an electricity generating wind farm such as a wind turbine generator, transformer or pole, comprising:
- a lower large pile section (2), at least partially hollow (10), with an open base end (16), adapted for excavation of sea bed material from inside the foundation (1),
- a mid section (4), at least partially hollow (12), that gradually narrows from the large pile section (2) towards an upper section (6), and
- a upper section (6), at least partially hollow (14), which extends from the mid section (4), ending in an open flange (8) suitable for attachment to said construction.

Another embodiment of the invention is a foundation (1) as described above, wherein at least part of the large pile section (2) hollow (10) is configured to support a submersible drilling rig (40) adapted to excavate material of sea bed through the open base end (16) of the large pile section (2).

Another embodiment of the invention is a foundation (1) as described above, further comprising the submersible drilling rig (40).

Another embodiment of the invention is a foundation (1) as described above, wherein the circumferential wall of the large pile section (2) at the terminus of the base end (16) forms a circumferential ridge (20) adapted to penetrate into the sea bed under the weight of the foundation (1).

Another embodiment of the invention is a foundation (1) as described above, wherein the circumferential ridge (20) is disposed with a continuous or segmented circular cutting wedge (30) configured such that the narrow end of the wedge is configured to penetrate into the seabed under the weight of the foundation (1).

Another embodiment of the invention is a foundation (1) as described above, wherein the hollows (10, 12, 14) of the large pile (2), mid (4) and upper (6) sections are connected to provide a continuous passageway from the open flange (8) to the open base (16) suitable for filling at least partially the foundation with solid and/or solidifiable ballast after installation.

Another embodiment of the invention is a foundation (1) as described above, adapted to receive solid and/or solidifiable ballast.

Another embodiment of the invention is a foundation (1) as described above, further comprising an adjustable cover plate (51) which is attached to the flange (4), onto which the construction can be mounted, and which comprises leveling means.

Another embodiment of the invention is a foundation (1) as described above, wherein the open base end (16) and optionally the open top end (18) of the foundation (1) is closed off with a breakable seal.

Another embodiment of the invention is an offshore construction mounted on a foundation as described above.

Another embodiment of the invention is an offshore wind farm, comprising at least one foundation as described above.

Another embodiment of the invention is an offshore platform suitable for assisting the installation of a foundation comprising a working deck (103, 104, 105, 106) supported by a plurality of supporting legs (112) secured to the seabed, and a docking bay (126) for the foundation (1), optionally flanked on adjacent sides by subsections of working deck (104, 105, 106).

Another embodiment of the invention is a method of offshore installation of a foundation (1) having a large pile with an open base end and a hollow space adapted to receive solid or solidifiable ballast, comprising the steps of:
1) placing the foundation (1) on the sea bed (42) such that the open base end (16) is in contact with sea bed,
2) Excavating the seabed from within the open base end (16),
3) Sinking the foundation (1) into the excavation site under the weight of the foundation,
4) Ballasting the foundation (1) with solid and/or solidifiable ballast (124).

Another embodiment of the invention is a method as described above, wherein the foundation (1) is as described above.

Another embodiment of the invention is a method as described above, further comprising the step of filling with grouting material (122) a circumferential crater (116) on the seabed (42) formed during the excavation process.

Another embodiment of the invention is a method as described above, wherein said solid and/or solidifiable ballast (124) is introduced via an opening in the top of the foundation (1).

### LEGENDS TO FIGURES

FIG. 1: Longitudinal cross-sectional view of a hybrid foundation according to the present invention.
FIG. 2: Longitudinal cross-sectional view of a hybrid foundation according to the present invention, indicating a modular construction.
FIG. 3: Longitudinal cross-sectional view of a hybrid foundation according to the present invention, indicating in-built ballasting tanks.
FIG. 4: Longitudinal cross-sectional view of the base of a hybrid foundation according to the present invention, indicating dimensions.
FIG. 5: Longitudinal cross-sectional view of the base of a hybrid foundation according to the present invention, disposed with a drilling rig.
FIG. 6: Longitudinal cross-sectional view of the base of a hybrid foundation according to the present invention, disposed with a drilling rig, sinking under the force of its own weight due to the destabilized sea bed.
FIG. 7: Plan view of an adjustable cover plate.
FIG. 8: Longitudinal cross-sectional views of an adjustable cover plate.
FIG. 9: Longitudinal cross-sectional views of an adjustable cover plate across the top end of the foundation.
FIGs. 10 to 13: Method of installation of a hybrid foundation: placing foundation on sea bed using platform-mounted cranes (FIG. 10); excavating sea bed from within foundation, and sinking foundation (FIG. 11); sinking foundation to final depth (FIG. 12); filling foundation with solid and/or solidifiable ballast (FIG. 13);
FIG. 14: Plan view of an off shore platform for installation of hybrid foundations according to the invention.
FIG. 15: Plan view of another off shore platform for installation of hybrid foundations according to the invention.
FIG. 16: Method of installation of a hybrid foundation using a single crane.

### DETAILED DESCRIPTION OF THE INVENTION

Unless defined otherwise, all technical and scientific terms used herein have the same meaning as is commonly understood by one of skill in the art. All publications referenced herein are incorporated by reference thereto. All United States patents and patent applications referenced herein are incorporated by reference herein in their entirety including the drawings.

The recitation of numerical ranges by endpoints includes all integer numbers and, where appropriate, fractions subsumed within that range (e.g. 1 to 5 can include 1, 2, 3, 4 when referring to, for example, a number of item, and can also include 1.5, 2, 2.75 and 3.80, when referring to, for example, measurements).

A first aspect of the present invention provides an offshore foundation for constructions such as bridges and upright (vertical) constructions, having an integrated hollow large pile, open at the base end such that seabed material can be excavated or drilled from inside the structure. Excavation weakens the sea bed on which the foundation stands, thus requiring only the weight of the foundation to drive the large pile section 2 downwards. By adjusting the rate of excavation, the weight of the foundation (e.g. by using cranes, hydraulic supports, or selective ballast tanks), and the angle of inclination (also using cranes, hydraulic supports, or selective ballast tanks) the foundation can be driven into the seabed in a controlled manner. Preferably, the open ended large pile section is configured to support a submersible drilling rig in the base end of the large pile which rig performs the excavation in a regulated fashion. The foundation is driven into the seabed under its own weight, consequently, it need not be made from a material such as steel that must withstand hammering used in conventional driven piles. Because the foundation can be made from, for example, reinforced concrete, production costs are significantly reduced, while benefitting from the stability that comes with embedded piles.

Conventional (large) monopiles are driven using a pile driver (hammering), thus soil conditions below the sea bed influence progress of the pile; for example, rocks, boulder clay and gravel hinder installation. The present invention uses an excavation technique that exposes soil layers and removes them progressively i.e. as the foundation is sunk. Consequently, excavation can be adapted as different soil conditions are encountered. Moreover, there are less limitations as to the depth of the water with the present foundation; installation in depths of 40 m or more is possible, which far exceed depths available with present methods and foundations.

The foundation may also comprise an interior void from the top end to the base end, which void may be at least partially filled with solid and/or solidifiable ballast to increase the stability further. The present invention therefore provides a hybrid foundation that benefits from the stability of the driven pile, but which construction does not rely on conventional hammering technique and gravity foundation which construction is limited to acceptable soil conditions.

Reference is made in the description to the drawings which exemplify particular embodiments of the invention; they are not at all intended to be limiting. The skilled person may adapt the foundation and substituent components and features according to the common practices of the person skilled in the art.

The foundation is referred to herein as having a base end 16 and a top end 18. The base end 16 refers to part a section or foundation pointing towards the sea bed, while the top end 18 to part a section or foundation pointing towards the sky i.e. away from the sea bed.

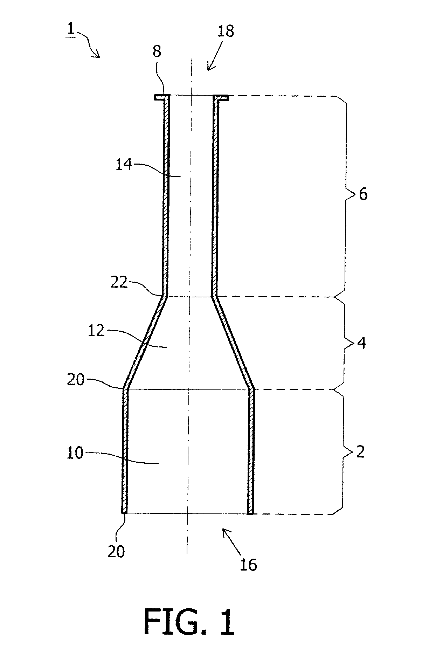

With reference to FIG. 1, the first aspect is related to an offshore foundation 1 comprising a hollow, large pile section 2 having an open base end 16 such that seabed material can be excavated any suitable technique such as hydraulic or mechanical excavation (e.g. by drilling, by boring, by cutting) from inside the structure, which large pile section 2 is connected to a mid section 4 that tapers gradually towards a narrower upper section 6 ending upwards in a flange 8. The offshore hybrid foundation 1 has a bottle shape. Preferably, the interior void (hollow space) of the large pile section 2 is configured to support a submersible drilling rig adapted to excavate hard material of sea bed from inside the foundation 1.

According to a preferred embodiment, the present invention provides an offshore foundation 1 for mounting an offshore construction such as a bridge, mast or components of an electricity generating wind farm such as a wind turbine generator, transformer or pole, comprising:
- a hollow large pile section 2 having an open base end 16, adapted for the excavation of seabed material from inside the foundation 1,
- a mid section 4 that gradually narrows from the large pile section 2 towards an upper section 6, and
- upper section 8 which extends from the mid section 4, ending in a flange 8 suitable for attachment to said construction,

The foundation is at least partially hollow and open at the top end 18 and base end 16, which ends are connected by the hollows (void spaces) that is in continuity between the sections. These hollow spaces 10, 12, 14 formed from the respective hollows of the large pile 2, mid 4 and upper 6 sections are connected to provide a continuous passageway from the open top 18 to the open base 16 suitable for filling at least partially the foundation with solid and/or solidifiable ballast after installation. This provides additional stability. The solid and/or solidifiable (e.g. sand, rocks, gravel, cement based material, concrete) is introduced through the open flange 8 of the foundation 1, and may fill at least the void in the large pile section 2, preferably also the void in the midsection 4. At least part of the void in the upper section 6 may contain solid and/or solidifiable ballast. As mentioned elsewhere, the continuous passage way also allows the passage of equipment and service lines for the excavation equipment.

The (lower) large pile section 2 is configured for embedding into the seabed as a hollow pile foundation. The large pile section 2 is at least partly hollow, open at its base end 16 and is joined at its top end 18 to the mid section 4. The large pile section 2 is joined to the mid section 4 at a first interface 20. The large pile section is integrated into the foundation 1. The large pile section 2 is significantly wider than the upper section 6 to ensure weight at the foundation when filled with solid and/or solidifiable ballast, and to resist overturning moment by horizontal loading.

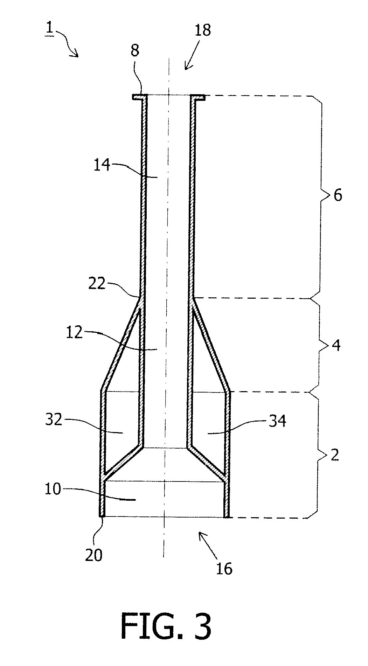

The large pile section 2 may be fitted with one or more tanks 32, 34 as shown, for example, in FIG. 3 which do not obstruct the passage of the drilling rig or ballast, which tanks can be filled with gas and/or liquid for changing the buoyancy of the foundation during installation. Said tanks may allow the foundation to temporarily float, for example, in an upright position when supported by a crane or winch. By employing a plurality of tanks 32, 34 arrange circumferentially inside the large pile section, the inclination of the foundation can be controlled during the excavation operation. The tanks 32, 34 may assist with buoyancy of the foundation during transport to the installation site. After installation, the tanks may be filled with solid and/or solidifiable ballast such as sand. It will be understood that the ballast tanks may not be restricted to the large pile section 2 but may extend into the mid section 4 as depicted in FIG. 3. It will be understood that other internal or external floating bodies may be employed to controlling the sinking process.

The open base end 16 and optionally the open top end 18 of the foundation 1 may be closed with a breakable seal. The breakable seal may temporarily provide buoyancy during transport i.e. it provide a water tight seal. The breakable seal may be made from any suitable material such as cement based material. The breakable seal over the open base end 16 is preferably adapted for breaching by the drilling rig 20 after placement on the sea bed 42. The skilled person would readily appreciate the suitable seal configurations, for example, thickness, weight and composition and their dependency upon size of foundation 1.

The large pile section 2 is tubular. It has an outer cross-sectional profile (across the longitudinal axis) which is circular as illustrated herein, though it may be of any suitable profile, e.g. cylindrical, triangular, square, polygonal, irregular. The large pile section 2 is preferably essentially cylindrical in shape. It may have a constant outer profile in cross-section upwards, or it can taper slightly in the upwards direction. The large pile section 2 is configured to extend into the seabed by a distance of 10 m, 12 m, 14 m, 15 m, 16 m, 17 m, 18 m, 19 m, 20 m or more or a value in the range between any two of the aforementioned values, preferably between 14 m and 16 m. The skilled person will understand that the deeper the large pile section is drilled into the ground, the greater the support to the vertical structure.

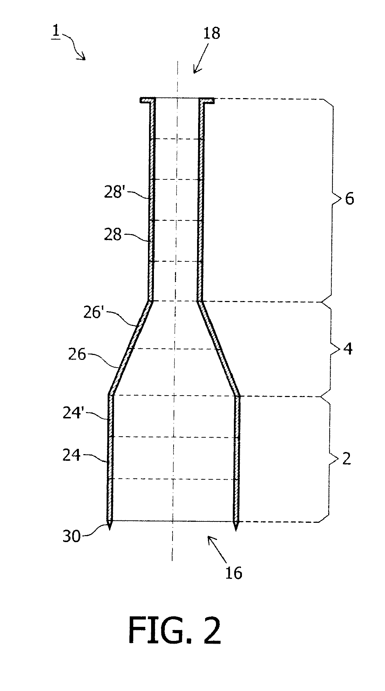

The large pile section 2 can be made of any suitable material as known in the art such as reinforced concrete, steel or composite; as mentioned elsewhere, the present invention avoids the requirement to employ steel, though it is not excluded from use. Where it is made from reinforced concrete, there may be a plurality of steel reinforcements e.g. an inner and outer steel mesh which constitute the walls of the section. The large pile section 2 can be formed in sections (e.g. in rings 22, 24') as indicated in FIG. 2 which sections are separately constructed, and then suitably joined to form the complete large pile section 2. As mentioned elsewhere, the large pile section 2 is at least partially hollow 10, meaning its interior void (hollow space) 10 provides a passageway to the open base 16 through which service piping to a submersible drilling rig can pass. The passage also provides a route for filling the foundation with solid and/or solidifiable ballast after installation, to provide greater stability of the large pile section. Accordingly, the interior void 10 of the large pile section 2 is adapted to hold solid and/or solidifiable ballast; adaptation may entail strengthening the wall of the large pile section.

The large pile section 2 may be built separately from the mid and upper sections, and the three sections joined in a tandem arrangement. The interior void 10 of the large pile section 2 is preferably in continuity 12 with the interior voids 12, 14 of the mid and upper sections.

The large pile section 2 is open at the base end 16. The circumferential wall of the lower section 2 at the terminus of the base end 16 forms a circumferential ridge 20. The ridge 20 is the leading edge of the foundation at the base end 20 that penetrates into the sea bed under the weight of the foundation. As mentioned earlier, excavation from within the foundation, for example, by use of a drilling rig, an excavating device, weakens the sea bed on which the foundation stands, requiring only the weight of the foundation to drive the large pile section 2 downwards.

The ridge 20 may optionally be disposed with a circular cutting wedge 30 (FIG. 2) in order to optimize the penetration by the ridge 20. The cutting wedge 30 may be continuously or segmentally disposed around the ridge, and is configured so that the narrow end of the wedge penetrates into the sea bed under the weight of the foundation. Where the cutting wedge is a plurality of segments (e.g. 2, 4, 6, 8, 10 or more), each segment may be independently raisable i.e. it can be lifted or lowered for instance by a hinge or sliding mechanism. When a segment is raised in an upper position, excavation may proceed underneath the raised segment; after excavation, the segment can be lowered and returned to its original position.

Preferably, the foundation is configured to enter the sea bed essentially vertically; as mentioned elsewhere, the inclination of the foundation can be adjusted using internal buoyancy tanks where fitted or temporary external buoyancy tanks. With reference to FIG. 2, the cutting wedge 32 is preferably disposed around the edge of the foundation at the base end 16 and may consist of several separate parts.

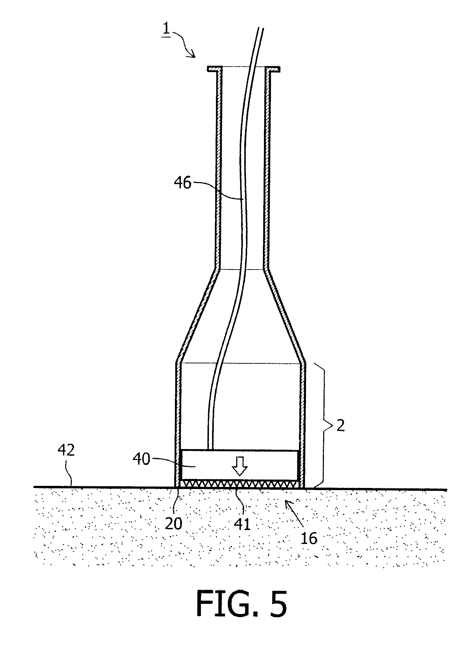

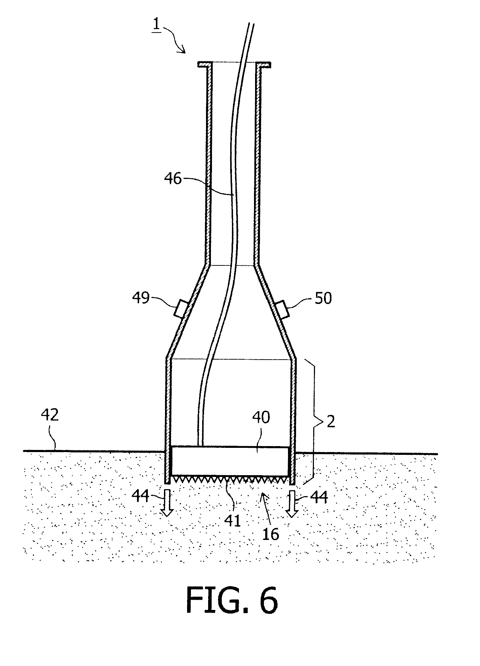

In case the seabed contains hard material, the interior void of the large pile section 2 is configured to support a submersible drilling rig 40 (FIG. 5), which rig 40 adapted to excavate material of sea bed through its open base end 16. It will be appreciated by the skilled person that a non-moving part of any drilling rig is attached to the inner wall of the large pile section 2. When the drilling rig 40 is activated, the cutting head 41 of the rig excavates a depression in the sea bed 42 below the base end 16 and within the perimeter of the large pile section 2. Soil from the depression is drawn from the excavation site through a service pipe 46 connected to the drilling rig. The depression destabilizes the soil on which the foundation rests. The weight of the foundation applies a downward force 44 to the destabilized sea bed through the ridge 20 and optional wedge, which drives the foundation 1 concomitantly downwards until it rests on stable ground again (FIG. 6). The cycle of excavating and sinking is continued until the pile is sufficiently embedded in the sea bed.

The drilling rig may be any in the art suitable for excavating hard material of the seabed off shore. As such, it should be submersible. It should also be disposed with an extraction system to remove the material so excavated, preferably to the surface. The extracted material may be used later as solid ballast. The cutting head may protrude below the ridge or cutting edge. At least part, and preferably all of the exterior surface of the large pile section may be lubricated with a friction-reducing mixture (e.g. Bentonite) that eases transport of the large pile section into the seabed.

According to one embodiment of the invention, the large pile section is provided with a slidable ring disposed around the circumference of the large pile section, which ring slides along the longitudinal axis of the large pile section. In situ and during installation, ring rests, gravity assisted, on the sea bed, and, as the foundation sinks, the large pile section slides relative to the ring that remains in fixed relation to the sea bed. During installation, the ring can be used as a foundation support for a system that lowers/raises the foundation 1 as described below. Preferably the ring is flattened.

The mid section 4 connects the large section 2 to the upper 6 section, and narrows gradually from the large pile section 2 towards the upper section 6. The mid section 4 is joined to the large pile section 2 at a first interface 20. The mid section 4 is joined to the upper section 6 at a second interface 22. The narrowing can be linear such as in a cone as exemplified in the present drawings. It may equally well be other shapes such as pyramidal or dome-like. It can also be stepped. The transverse cross-sectional profile (i.e. perpendicular to the longitudinal axis) of the mid section 4 can be circular as illustrated herein, however, it can also be any suitable shape such as square, triangular, or polygonal. Depending on the cross-sectional profile of the mid section 4 it may alternatively be square, triangular or any suitable shape. The mid section is position below the water level to avoid loading by wave action. It may also serve to break up any floating ice blocks extending below the level of the water before they cause damage to the more slender upper section.

The mid section 4 can be made of any suitable material as known in the art such as reinforced concrete or steel; as mentioned elsewhere, the present invention avoids the requirement to employ steel, though it is not excluded from use.. Where it is made from reinforced concrete, there may be a plurality of steel reinforcements e.g. an inner and outer steel mesh which constitute the walls of the foundation. The mid section 4 can be formed from smaller sections (e.g. in rings 26, 26') as illustrated in FIG. 2 which are separately constructed, and then suitably joined to form the complete mid section 4.

The mid section 4 may also be built separately from the lower, mid and upper sections, and the three sections joined in a tandem arrangement. The interior void (hollow space) 12 of the mid section 4 is preferably in continuity 12 with the interior voids 10, 14 of the large pile and upper sections.

The mid section 4 is at least partially hollow 12, meaning it provides a passageway to the open base 16 in the large pile section 2 through which service piping to the excavating device or a submersible drilling rig can pass. The passage also provides a route for filling the foundation with solid and/or solidifiable ballast after installation, to provide greater stability of the large pile section. Accordingly, the interior void 12 of the mid section 4 may be adapted to hold solid and/or solidifiable ballast; adaptation may entail strengthening the wall of the mid section 4.

In a preferred embodiment of the invention there is a continuous void 10, 12, 14 between the open flange and the open base through which solid and/or solidifiable ballast and service piping to the excavating device or the drilling rig can pass.

The upper section 6 is significantly narrower than the lower section 2. It is tubular and ends upwards in a flange 8 which is capable of coupling with the offshore construction. The upper section 6 has cross-sectional profile (across the longitudinal axis) which is circular as illustrated herein, though it may be of any suitable profile, e.g. triangular, square, polygonal, irregular. The upper section 6 is preferably essentially cylindrical in shape, and also has a smaller diameter in the wave affected area at the sea surface. It can have a constant profile in cross-section upwards, or it can taper slightly in the upwards direction. The upper section is configured to extend above the level of the sea when the foundation is installed on the sea bed.

The upper section 6 can be made of any suitable material as known in the art such as reinforced concrete, steel or composite; as mentioned elsewhere, the present invention avoids the requirement to employ steel, though it is not excluded from use. Where it is made from reinforced concrete, there may be a plurality of steel reinforcements e.g. an inner and outer steel mesh which constitute the walls of the section. The upper section 6 can be at least partially hollow, which allows the foundation to temporarily float, for example, in an upright position when supported by one or more cranes. The upper section 6 can be formed in sections (e.g. in rings 28, 28') as indicated in FIG. 2 which sections are separately constructed, and then suitably joined to form the complete upper section 6. The upper section 6 is at least partially hollow 14, meaning it provides a passageway to the open base 16 in the large pile section 2 through which service piping to a submersible drilling rig can pass. The passage also provides a route for filling the foundation with solid and/or solidifiable ballast after installation, to provide greater stability of the large pile section. Accordingly, at least part of the interior void (hollow space) 14 of the upper section 6, preferably the lower part, may be adapted to hold solid and/or solidifiable ballast; adaptation may entail strengthening the wall of the upper section 6.

The upper section 6 may also be built separately from the lower section, and both sections joined. The interior void 14 of the upper section is preferably in continuity with the interior voids 12, 10 of the mid and lower sections.
Preferably the foundation 1 is an essentially hollow structure, open at the top end 18, and at the base end 16. Methods of engineering and construction of a foundation are known to the person skilled in the art.

The top 18 end of the upper section 6 (i.e. flange 8) is preferably open (unsealed), though it may be disposed with a breakable seal. The breakable seal may temporarily provide buoyancy during transport i.e. it provides a water tight seal. The breakable seal may be made from any suitable material such as cement based material. The skilled person would readily appreciate the suitable seal configurations, for example, thickness, weight and composition and their dependency upon size of foundation 1.

The upper, mid and lower sections maybe provided with additional features as is common to off shore constructions such as, for example, inspection platforms, ladders, inspection hatches, mooring devices etc., and which are within the scope of the present invention.

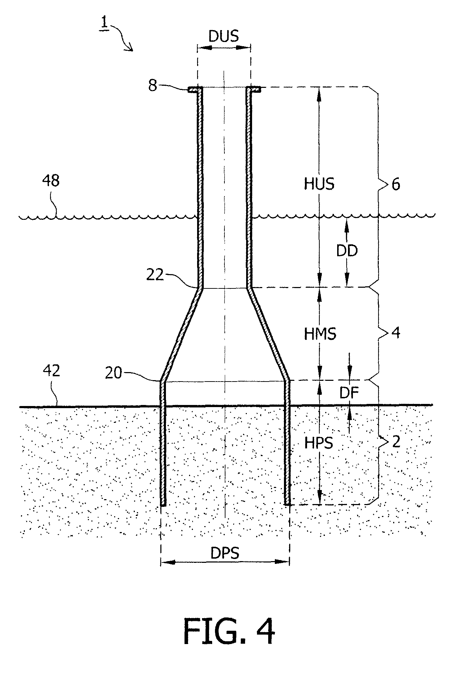

The relative dimensions of the large pile section 2, mid section 4 and upper section 6 depend on the depth of the sea bed, load of the foundation, construction material of the large pile, mid and upper sections. Other limitations include the capacity of the construction and transport facilities, and area available on the sea bed. The person skilled in the art can calculate optimised dimensions based on these parameters, and in view of the aspects below. Exemplary dimensions are provided as guidance. According to one aspect of the invention, the height (HPS) of the large pile section 2 is 4 m, 5 m, 6 m, 8 m, 10 m, 12 m, 14 m, 15 m, 16 m, 17 m, 18 m, 19 m, 20 m, or a value between any two of the aforementioned value. According to another aspect of the invention, the first interface 20 between the large pile- and mid-sections 2, 4 is positioned, so as to be located above the surface of the seabed 42 (FIG. 4) after installation. According to one aspect of the invention, the first interface 20 between the large pile 2 and mid section 4 is located as a distance (DF) equal to or less than 0.5 m, 1 m, 1.5 m, 2 m, 2.5 m, 3 m, 3.5 m, 4 m, 4.5 m, 5 m, 5.5 m, 6 m, 7 m, 8 m, 9 m, 10 m above the surface of the seabed 42 after installation, or a distance between any two of the aforementioned values.

According to one aspect of the invention, the maximum transverse diameter (DPS) of the large pile section 2 is equal to or greater than 0.5, 1, 2, 3, 4, 5, 6, 7 or 8 times the diameter of the upper section 6, or a factor in the range between any two of the aforementioned values; it is preferably between 4 and 6 times. According to one aspect of the invention, the maximum transverse diameter (DPS) of the large pile section 2 is equal to or greater than 8 m, 10 m, 11 m, 12 m, 14 m or a value in the range between any two of the aforementioned values.

According to one aspect of the invention, the height (HMS) of the mid section 4 is 10 m, 12 m, 14 m, 15 m, 16 m ,17 m, 17.5 m 18 m, 19 m, 20 m or a value between any two of the aforementioned values, preferably between 16 m and 19 m. According to one aspect of the invention, the second interface 22 between the mid and upper sections 4, 5 is positioned so as to be located below the surface of the sea 48 (FIG. 4) after installation, at depth below the keel of a docking vessel. The position of the second interface 22 allows a vessel to dock with the foundation 1 without grounding on the mid section 4 and allowing for tidal variation. According to one aspect of the invention, the second interface 22 between the upper and mid parts is 1, 1.5, 2, 2.5, 3, 3.5, 4, 4.5, 5, 5.5, 6, 7, 8, 9, 10 m below the surface of the sea at the lowest tide, or a depth (DD) between any two of the aforementioned values. Preferably, the second interface 22 between the mid and upper section is at a depth (DD) between 3 m and 5 m below the lowest tide to allow service vessels to moor.

According to one aspect of the invention, the height (HUS) of the upper section 6 is 4 m, 5 m, 6 m, 8 m, 10 m, 12 m, 14 m, 15 m, 16 m, 18 m, 20 m, 22 m, 24 m, 26 m, 28 m, 30 m, 32 m, 34 m, 36 m or 38 m or a value between any two of the aforementioned value.

According to one aspect of the invention, the maximum transverse diameter (DUS) of the upper section 6 is equal to or less than 0.5, 1, 2, 3, 4, 5, 6, 7 or 8 times smaller than the diameter of the lower section 2, or a factor in the range between any two of the aforementioned values; it is preferably between 4 and 6 times. The said diameter (DUS) is understood to be measured with the exclusion of the flange 8. The maximum transverse diameter is preferably as small as possible to prevent horizontal loading by the waves.

The thickness of the wall of the large pile 10 and upper 11 sections is preferably limited in order to reduce the weight of the construction during construction, transport and installation.

Other factors used to determine relative dimensions include the weight of the construction taking in account the forces during transport, filling the base foundation and the overall stability wind turbine generator including foundation.

As mentioned elsewhere, at least part of the foundation is filled with solid and/or solidifiable ballast, preferably the interior void 10 of the large pile section 2, and the preferably in addition, the interior void 12 of the mid section 4, and optionally in addition, at least part of the interior void 14 of the upper section 6. The solid and/or solidifiable ballast is preferably introduced through the top of the foundation 1 e.g. through an opening in an upper section such as the open flange 8.

Solid ballast refers to ballast material such as sand, rocks, gravel and high density material that is, in its native condition, solid. Solidifiable ballast is liquid or semi-liquid ballast that is able to set solid, such as concrete or cement based material. Solidifiable ballast is able to set at temperatures, pressures and environments typically encountered in conventional offshore underwater conditions.

The ballast material is sufficiently heavy to provide stability to the foundation in the same way as it provides stability to a gravity foundation. The skilled person will understand the requirements of density. The ballast should have limited creep (settlement time) and sufficient sheer resistance to ensure that the vertical and horizontal loads on the structure can be transferred through this material to the foundation level. Sand or rock has the above mentioned charateristics.

During transport to the installation site, the foundation 1 is suspended in the sea. Where external or internal buoyancy tanks 32, 34 are present and air-filled, the buoyancy reduces the net weight, so reducing transportation weight and assuring increased stability during transport. The foundation 1 is supported in the sea by one or more cranes mounted on a platform such as provided by a barge or pontoon that is either floating or fixed, maintaining the foundation in an essentially upright and vertical position during drilling. To assist installation, the foundation may be provided with one or more hoisting points 49, 50 (FIG. 6). The hoisting points may be positioned above or below the centre of gravity of the foundation, preferably in the vicinity of the mid section 4 or upper section 6, and allow attachment to the crane(s). Such hoisting points are known in the art. One aspect of the present invention, therefore, is a foundation comprising one or more hoisting points 14 located on the upper section 6 or mid section 4. Preferably there are two or more hoisting points such as pins, arranged in a ring around a portion of the upper section 6 or mid section 4. A plurality of hoisting points allow a differential pulling force to be applied at each point, thereby adjusting the inclination of the foundation, and also the speed of entry into the sea bed.

The hoisting points 49, 50 is preferably positioned, so as to be located below the surface of the sea after installation, at depth below the keel of a docking vessel. The position allows a vessel to dock with the foundation 1 without grounding on the hoisting points 49, 50 and allowing for tidal variation.

The materials of construction, and dimensions of the hoisting points 49, 50 can be determined by the person skilled on the art, depending on the weight and dimensions of the foundation. Each hoisting points 49, 50 is preferably of a shape and thickness to couple with the effector end of each crane hoist which allows a close and safe coupling during lifting and installation.

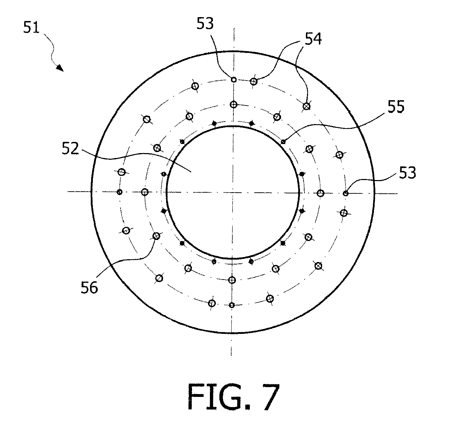

The upper section 6 ends upwards in a flange 8 to which the offshore construction is attached. The offshore construction can be any such as, for example, a bridge, a radio mast, or an electricity generating wind farm component such as the wind turbine, transformer or pole. A wind turbine, typically comprises a connecting flange, tower, nacelle, and rotor blades. For efficiency and to reduce overall stresses, it is desirable to maintain the tower of the wind turbine in a true vertical position, which depends on the flatness of the seabed to achieve a truly vertical foundation. Even small variations in the sea bed can lead to a large and undesirable inclination of the foundation. It is an aspect of the invention to overcome deviation in the vertically of the foundation by providing an adjustable cover plate 51 which attaches to the flange 8, onto which the wind turbine can be mounted, and which comprises leveling means. The adjustable cover plate can be leveled prior to mounting of the turbine. An example of a cover plate is provided in FIGs. 7 to 9.

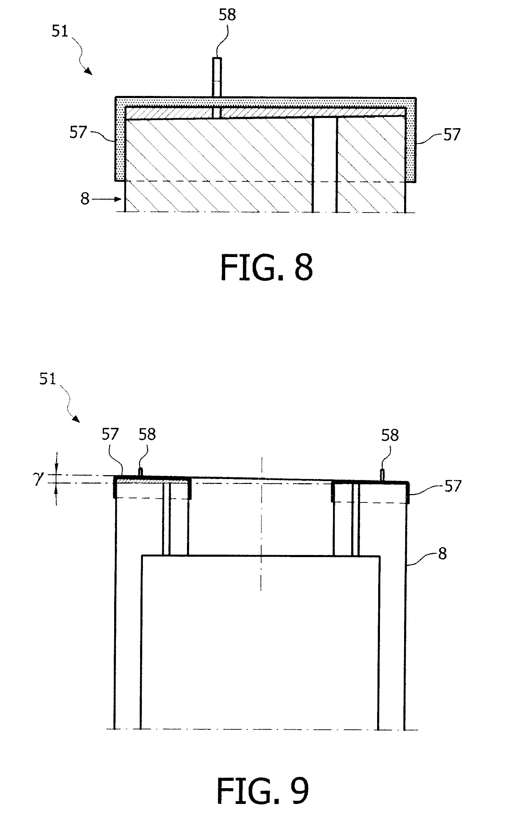

The cover plate 51 fits over at least part of the flange 8 of the upper section. It preferably covers the area of the flange 8 following essentially the same shape thereof (e.g. circular, square, triangular etc). Where the flange has a hollow centre, the cover plate may also have a hollow centre 52 as shown in FIGs. 7 to 9, though it may also cover the opening caused by a hollow centre of the flange 8. The cover plate 51 can be made from one or more suitable materials such as steel. The cover plate 51 can be provided with a plurality of screw adjustments 53 to raise or lower a given portion of the cover plate relative to the flange. A screw adjustment 58 is indicated in FIGs. 8 and 9. The cover plate may be leveled by fine tuning the screw adjustments. Alternatively, the cover plate 51 may be provided with other means to adjust the height such as, for example, inflatable bags, hydraulic pistons, levers or any other means for changing the height of part of the adjustable plate relative to the flange. The cover plate 51 is provided with openings for anchor bolts 56 of the wind turbine.

The cover plate 51 in FIG. 8 is provided with one or more additional rims 57, 58 which flank the sides of the flange 4, so capping the flange 8. The rims 57, 58 may act to seal the cover plate 51 during injection of hard-setting substances, and/or to protect the edge of the flange 8 from weathering.

By adjustment, one or more angles of inclination of the foundation can be corrected e.g. gamma in as indicated in FIG. 9, so that tower lies in a true position.

The adjustable cover plate 51 allows the top platform to be adjusted before installation of the wind turbine. This makes the leveling procedure easier as access to the foundation 1 is not impeded by the turbine, and the weight of the turbine does not need to be moved during adjustment. By leveling the platform at sea, a more accurate final leveling is achieved.

The foundation may be constructed onshore, from prefabricated sections. The construction comprises principally three main phases, and one optional step:
1. Construction of the large pile section 2 (from rings or a one piece section),
2. Construction of the mid section 4 (from rings or a one piece section),
3. Construction of the upper section 6 (from rings or a one piece section),
4. Optional construction of the adjustable cover plate 51.

The present invention is applicable to a foundation constructed on land, intended for transport and installation at sea. It also relates a foundation installed at sea. One embodiment of the present invention is an offshore foundation as disclosed herein. Another embodiment of the present invention is an offshore construction (e.g. a bridge, an upright construction such as a mast, wind farm component, wind turbine, transformer, pole) mounted on a foundation as disclosed herein. Another embodiment of the present invention is an offshore wind farm, comprising at least one foundation as disclosed herein.

As mentioned earlier, the weight and inclination of the foundation 1 may be controlled using one or more cranes or hydraulic supports mounted on a platform above the level of the sea. Various options are available for controlling sinking, all of which are envisaged by the invention. Described elsewhere herein is a selection of techniques.

In the case of using one or more cranes the cables of the crane(s) may be connected to the foundation via the aforementioned hoisting points 49, 50. By adjusting the tension on the cables, the foundation can be raised or lowered so as to control the rate of sinking. Moreover, applying a differential tension to each cable adjusts the angle of inclination of the foundation 1 during installation. It will be appreciated that other techniques for controlling the penetration of the large pile section 2 operating from the seabed may also be used.

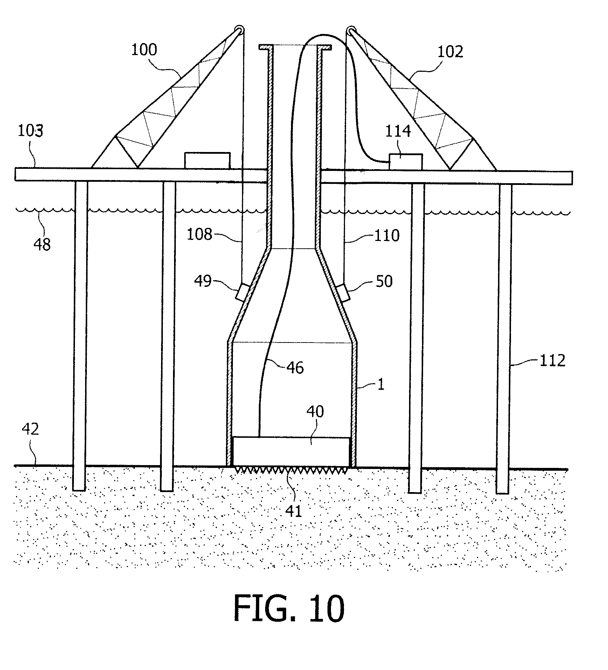

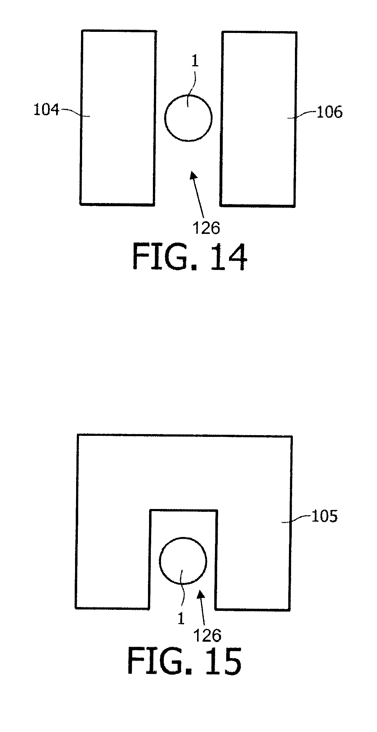

With reference to FIGs. 10 to 15 and 16, one embodiment of a crane platform comprises a working deck 103, 104, 105, 106 supported by a plurality of supporting legs 112 secured to the seabed, and a docking bay 126 for a foundation 1, preferably a foundation of the invention. The docking bay may be on one side of the platform as shown in FIG. 10 to 13 and 16, or as shown in FIGs. 14 to 15, may be flanked on adjacent sides by subsections of working deck 104, 106.

The docking bay 126 that is flanked on adjacent sides by subsections of working deck 104, 105, 106, (FIGs. 14 and 15) allows entry of the foundation 1 through its entrance. Cranes used to during installation can be placed in symmetrical alignment with the foundation 1. This alignment not only allows the cranes to adjust the angle of inclination of the foundation 1 during installation, but also evenly distributes the weight of the foundation 1 evenly over the platform. As shown in FIG. 14, subsections of working deck 104, 106 may flank the docking bay 126 on opposite adjacent sides. Permanent or temporary bridges may connect each subsection 104, 106 of working deck, which allow the transport of personnel, equipment and supplies. As a variation, subsections of working deck 105 may flank the docking bay on three adjacent sides as shown in FIG. 15, thereby forming a U-shaped deck. The U-shaped deck advantageously provides access to the foundation from three sides, for example, the additional side supporting an additional crane that can provide an additional plane through which the foundation can be controllably inclined.

As mentioned, the working deck 103, 104, 105, 106 may be supplied with one or more suitably arranged cranes 100, 102. It may also be provided with one or devices that assist with foundation installation such as a pump 115 adapted to remove material excavated from the sea bed. A pump 116 adapted to pump solid and/or solidifiable ballast into the foundation void. It may also be provided with operational facilities (e.g. workshop, office space, store rooms) and living facilities (e.g. accommodation, mess room, entertainment facilities) for the crew.

The platform of the invention is well suited for docking any foundation preferably a gravity foundation, preferably a foundation of the present invention, allowing it to be easily and safely lifted without placing undue stress on one side of the platform. In order to supply the foundation with the necessary stiffness and stability as a function of the characteristics of the sea bed, the weight of the facilities on board the platform, the weight to be supported and the meteomarine conditions etc, the number of legs and the attachment to the sea bed can be fully optimized.

A second aspect of the invention is a method for the installation of a foundation of the present invention. Reference is made herein to FIGs. 10 to 13, which illustrate certain embodiments of the method; they are not intended anyway to limit the invention. The skilled person may adapt the method and substituent features according to the common practices of the person skilled in the art.

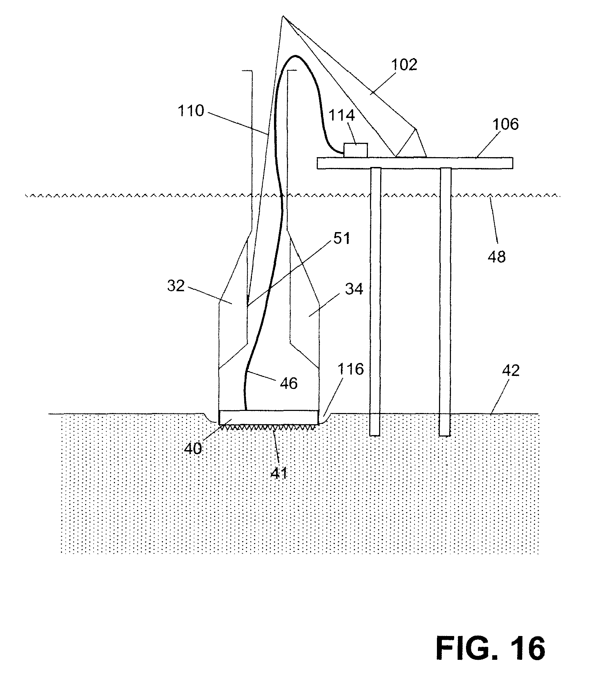

According to a method of the invention, the installation comprises one or more, and preferably all the following steps:
Step 1. Placing the foundation of the invention on the sea bed 42 such that the open base, more preferably, the circumferential ridge, is in contact with sea bed (FIG. 10). The open base is disposed with a submersible drilling rig 40, the cutting head of which contacts the sea bed. The foundation 1 is preferably supported by at one or more above-sea level cranes. As mentioned elsewhere, hoisting pins 49, 50 may be attached to the mid section at circumferentially opposite points provide an attachment for the crane cables 108, 110. Where a single crane 102 is employed (FIG. 16), a single attachment point 51 may be provided within the interior void of the foundation, and gas ballasting tanks 32, 34 used to adjust the angle of inclination.

It is noted that the use of two cranes to support and control sinking as shown in FIGs. 10 to 13 or a single crane as shown in FIG. 16 is just one of several possible solutions; other solutions exist as explained below.

The foundation may, for example, be supported using a collar mounted on the upper section 2 of the foundation 1. By arranging a plurality of hydraulic cylinders around the collar, the collar can be controllably lifted and lowered relative to an above-sea level platform that extends over the upper section of the foundation. Angle of inclination can be adjusted by selectively extending the hydraulic cylinders to different degrees.

The foundation may alternatively be supported using one or more winches mounted on an above-sea platform that extends over the upper section of the foundation. The cable of each winch attaches to a hoisting point inside or outside the foundation. By arranging the plurality of winches around the periphery of the upper section, the foundation can be controllably lifted and lowered. Angle of inclination can be adjusted by selectively adjusting the tension on each cable.

The foundation may alternatively be supported using a plurality of submersible hydraulic pile gripper assemblies, each mounted at one end on the sea bed, and at the other end attached to a pile gripper for dismountable attachment to the exterior of a large pile section. The foundation 1 may be controllably lowered and lifted by activating an hydraulic cylinder. The large pile section may be provided with a plurality of circumferential grooves into which the pile gripper dismountably attaches. The hydraulic pile gripper assembly may be mounted on the sea bed using the slidable ring described above, as a stable foundation. By arranging the plurality of submersible hydraulic pile gripper assemblies around the periphery of the large pile section 2, the foundation 1 can be controllably lifted and lowered. Angle of inclination can be adjusted by selectively extending the hydraulic cylinders by different amounts.

The foundation may alternatively be supported using one or more submersible winches mounted on the sea bed. The cable of each winch attaches to a hoisting point outside the foundation, towards the base end of the large pile section 2. By arranging the plurality of winches around the periphery of the large pile section 2, the foundation 1 can be controllably lifted and lowered. Angle of inclination can be adjusted by selectively adjusting the tension on each cable. The winches may be mounted on the sea bed using the slidable ring described above, as a stable foundation.

The foundation 1 may alternatively be supported using a plurality of submersible caterpillar track assemblies comprising a movable caterpillar track that can dismountably engage with the exterior of the large pile section 2, and a chassis held in fixed relation to the seabed. The foundation 1 may be controllably lowered and lifted by activating the caterpillar track. The chassis of the caterpillar track assembly may be mounted on the sea bed using the slidable ring described above, as a stable foundation. By arranging the plurality of submersible catapillar track assemblies around the periphery of the large pile section 2, the foundation 1 can be controllably lifted and lowered. Angle of inclination can be adjusted by selectively advancing the caterpillar tracks by different amounts.

The foundation 1 may alternatively be supported using a plurality of submersible hydraulic cylinder assemblies attached at one end to the interior of the foundation 1 and, and at the other end to a foot that extends from the open base. The foot, extended hydraulically, contacts the excavated floor and stabilizing the foundation during excavation. By arranging the plurality of submersible hydraulic cylinder assemblies around the inside of the large pile section 2, the foundation 1 can be controllably lifted and lowered. Angle of inclination can be adjusted by selectively extending or retracting the assemblies by different amounts.

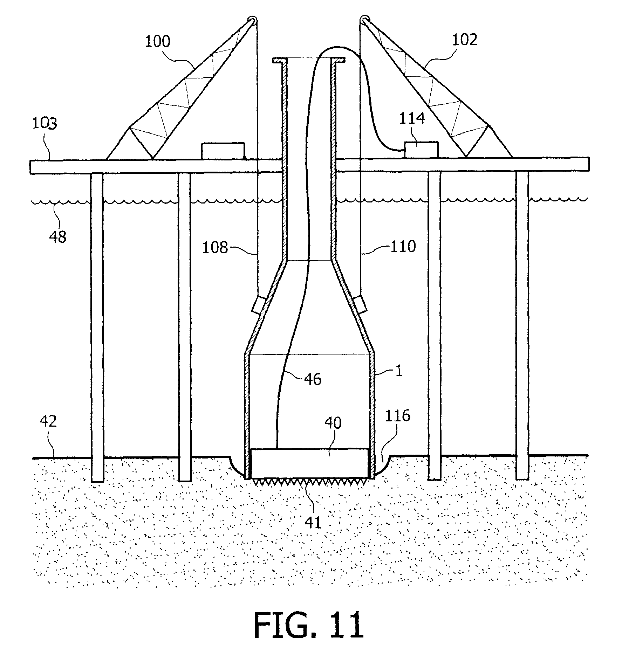

Step 2. Excavating the seabed from inside the open base end (FIG. 11). The submersible drilling rig 40 is activated that proceeds to excavate material from the sea bed within the perimeter of the circumferential ridge. Excavated material is pumped out from the foundation void through a service pipe 46 using an extraction pump 114 on the working deck 106, or a submersible pump at the end of the service pipe 46. Movements of the drilling rig cutting head may be within or extend beyond the inside edge of the circumferential ridge 20 or cutting wedge 30. In the latter situation the cutting head extends beyond the inside edge of the circumferential ridge 20 i.e. it is able to advance underneath the circumferential ridge 20 or cutting wedge 30. Using the systems to control sinking described above, the drilling rig 40 can excavate the soil directly underneath the circumferential ridge 20, without danger that the foundation will sink and crush the drilling rig 40

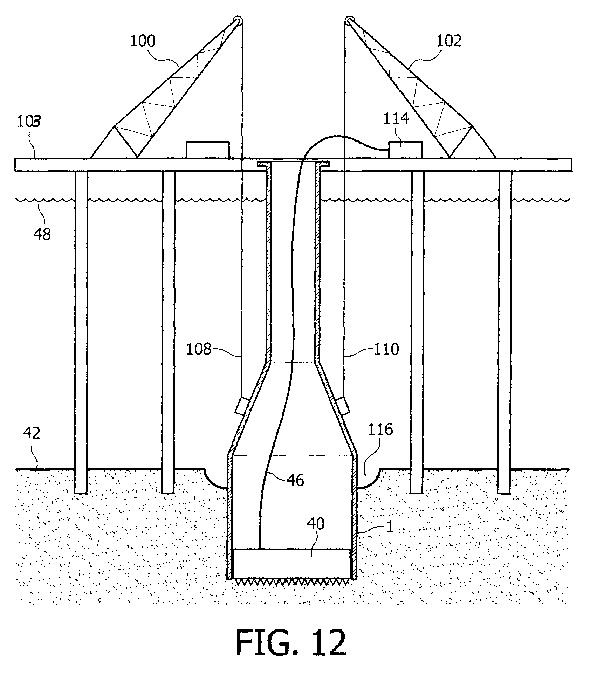

Step 3. Sinking the foundation into the excavation site under the weight of the foundation (FIGs. 11 and 12). The sea bed is destabilized in the vicinity of the circumferential ridge, and the weight of the latter causes the foundation to sink. In case of uneven excavation, for example, where the seabed is unevenly excavated, tension of the crane cables 108, 110 can be applied to maintain the foundation upright. Moreover, the speed of sinking can be regulated. It is noted that excavation causes the formation of a crater 116 at the surface of the seabed 42 that surrounds the large pile section - this may be later filled with suitable grouting material. FIG. 12 shows the final position of the foundation in the sea bed i.e. after completion of controlled excavation.

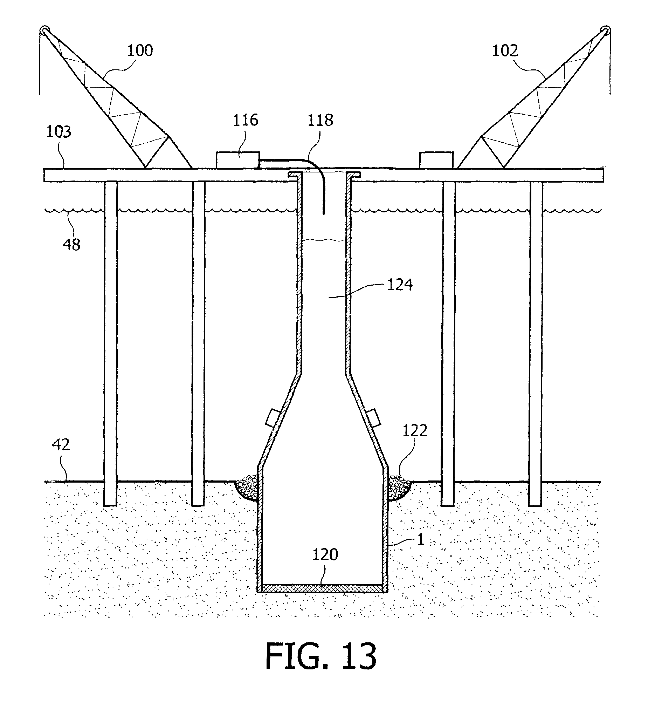

Step 4. Ballasting the foundation with solid and/or solidifiable ballast (FIG. 13). The solid ballast (e.g. sand, rocks, gravel) is introduced through the top of the foundation 1 e.g. through an opening in an upper section such as the open flange 8. With reference to FIG. 13, the solid and/or solidifiable ballast 124 can be provided by a pump 115 attached to a feeding pipe 118 Alternatively, ballast can be provided to the foundation 1 by any means such as, for example, using a crane on the platform with a bucket head to mechanically scoop loads of ballast into the foundation 1. The ballast may be for example, sand. The ballast sand may be sand excavated from the excavation process or dredged from the sea bed in a location nearby the well, which configuration reduces the cost of transporting ballast to the site of installation. The solid and/or solidifiable ballasting may be performed in stages so the ballast can properly settle. In FIG. 13, the space above the ballasted part 124, can be further filled once the ballasted part 124 has settled.

The ballasting operation may optionally include a step of introducing first solidifiable ballast (liquid ballast that is able to set solid under conventional offshore underwater conditions) such as concrete into the void and allowing to solidify. The solidifiable ballast closes the open base end of the foundation, forming a solid plate 120 (FIG. 13) in rigid attachment to the base end. One solidified, ballasting may resume with conventional solid ballast (e.g. sand, gravel, rocks). The solid plate provides a structure adapted to receive solid ballast, and transferring forces of the solid ballast in a downward direction and contributing to the overall stability.

The amount of solid and/or solidifiable ballast to at least partially fill the foundation can be readily calculated by the person skilled in the art. As a guidance, however, the foundation may be filled with 3650 m3 of sand, for a foundation installed in a depth of water at 45 m, embedded 20 m in the sea bed, with an unballasted weight (structural concrete) of 2410 Tonnes.

Step 5. Filling the circumferential area in the seabed being the gap between the large pile section 2 and the surrounding seabed with a grouting material; The grouting material provides sufficient friction and horizontal soil pressure once the large pile is installed and has reached its target depth.

The grouting material 122 is any suitable for submersible applications, and is preferably a cement based material. The skilled person may adapt the grouting material 122 according to the common practices of the person skilled in the art taking in consideration the site specific conditions and the seabed morphology.

Step 6. Adding a layer of armour rock to the well area. The rock layer may optionally applied around the periphery of the foundation, on the sea bed. The rock layer further protects the foundation from erosion (scour protection). Examples of suitable rock sizes include rock of weight 10, 20, 30, 40, 50, 60, 70, 80, 90 or 100 kg, or a mass in the range between any two of the aforementioned masses or even above depending on the wave climax and currents that could occur in the vicinity of the foundation. Preferably, the rock layer comprises rocks between 10 to 60 kg in mass.

The rock layer may be applied by any known technique, for example, by dumping from a stone-dumping vessel.

The thickness of rock layer can be calculated by the person skilled in the art. As a guidance, however, the armour rock may be of a thickness of 0.9m, for a foundation structure which is 10m in diameter in the large pile.

The skilled person may adapt the armour rock layer according to the common practices of the person skilled in the art taking in consideration the site specific conditions and the seabed morphology.

## Claims

1. An offshore foundation (1) for mounting a construction such as a bridge, mast or components of an electricity-generating wind farm such as a wind turbine generator, transformer or pole, comprising:
- a lower large pile section (2), at least partially hollow (10), with an open base end (16), adapted for excavation of seabed material from inside the foundation (1),
- a mid-section (4), at least partially hollow (12), that gradually narrows from the large pile section (2) toward an upper section (6), and
- an upper section (6), at least partially hollow (14), which extends from the mid-section (4), ending in an open flange (8) suitable for attachment to said construction.

2. Foundation (1) as claimed in claim 1, wherein at least part of the large pile section (2) hollow (10) is configured to support a submersible drilling rig (40) adapted to excavate seabed material through the open base end (16) of the large pile section (2).

3. Foundation (1) as claimed in claim 1 or 2, further comprising a submersible drilling rig (40).

4. Foundation (1) as claimed in any of the foregoing claims 1-3, wherein the circumferential wall of the large pile section (2) at the terminus of the base end (16) forms a circumferential ridge (20) adapted to penetrate into the seabed under the weight of the foundation (1).

5. Foundation (1) as claimed in claim 4, wherein the ridge (20) is disposed with a continuous or segmented circular cutting wedge (30) configured such that the narrow end of the wedge is configured to penetrate into the seabed under the weight of the foundation (1).

6. Foundation (1) as claimed in any of the foregoing claims 1-5, wherein the hollows (10, 12, 14) of the large pile (2), mid- (4) and upper (6) sections are connected to provide a continuous passageway from the open flange (8) to the open base end (16) suitable for at least partially filling the foundation with solid and/or solidifiable ballast after installation.

7. Foundation (1) as claimed in any of the foregoing claims 1-6, adapted to receive solid and/or solidifiable ballast.

8. Foundation (1) as claimed in any of the foregoing claims 1-7, further comprising an adjustable cover plate (51) which is attached to the flange (4), onto which the construction can be mounted, and which comprises leveling means.

9. Foundation (1) as claimed in any of the foregoing claims 1-8, wherein the open base end (16) and optionally the open top end (18) of the foundation (1) is closed off with a breakable seal.

10. An offshore construction mounted on a foundation as claimed in any of the foregoing claims 1-9.

11. An offshore wind farm, comprising at least one foundation as claimed in any of the foregoing claims 1-9.

12. An offshore platform suitable for assisting the installation of a foundation, comprising a working deck (103, 104, 105, 106) supported by a plurality of supporting legs (112) secured to the seabed, and a docking bay (126) for the foundation (1), optionally flanked on adjacent sides by subsections of the working deck (103, 104, 105, 106).

13. A method of offshore installation of a foundation (1) having a large pile with an open base end and a hollow space adapted to receive solid or solidifiable ballast, comprising the steps of:
1) placing the foundation (1) on the seabed (42) such that the open base end (16) is in contact with seabed,
2) excavating the seabed from within the open base end (16),
3) sinking the foundation (1) into the excavation site under the weight of the foundation,
4) ballasting the foundation (1) with solid and/or solidifiable ballast (124).

14. Method as claimed in claim 13, wherein the foundation (1) is as defined as in any of the foregoing claims 1-8.

15. Method as claimed in claim 13 or 14, further comprising the step of filling with grouting material (122) a circumferential crater (116) on the seabed (42) formed during the excavation process.

16. A method as claimed in any of the foregoing claims 13-15, wherein said solid and/or solidifiable ballast (124) is introduced via an opening in the top of the foundation (1).
